# EUROPÄISCHE PATENTSCHRIFT

(11) **EP 3 797 461 B1**
(45) Veröffentlichungstag und Bekanntmachung des Hinweises auf die Patenterteilung: **02.08.2023**
(21) Anmeldenummer: 19722606.1
(22) Anmeldetag: 07.05.2019
(51) Int. Cl.: H02J 1/10, H02J 7/34

(54) **ELEKTRISCHE BORDNETZVORRICHTUNG ZUM VERSORGEN VON ZUMINDEST ZWEI ELEKTRISCHEN VERBRAUCHERN IN EINEM KRAFTFAHRZEUG SOWIE KRAFTFAHRZEUG, UMSCHALTVORRICHTUNG UND VERFAHREN ZUM BETREIBEN EINER BORDNETZVORRICHTUNG**
ELECTRICAL ON-BOARD NETWORK DEVICE FOR SUPPLYING AT LEAST TWO ELECTRICAL CONSUMERS IN A MOTOR VEHICLE, AND MOTOR VEHICLE, SWITCHOVER DEVICE, AND METHOD FOR OPERATING AN ELECTRICAL ON-BOARD NETWORK DEVICE
DISPOSITIF DE RÉSEAU DE BORD ÉLECTRIQUE POUR ALIMENTER AU MOINS DEUX CONSOMMATEURS ÉLECTRIQUES DANS UN VÉHICULE AUTOMOBILE ET VÉHICULE AUTOMOBILE, DISPOSITIF DE COMMUTATION ET PROCÉDÉ DE FONCTIONNEMENT D'UN DISPOSITIF DE RÉSEAU DE BORD

(30) Priorität: 22.05.2018 DE 102018207960
(43) Veröffentlichungstag der Anmeldung: 31.03.2021
(73) Patentinhaber: VOLKSWAGEN AKTIENGESELLSCHAFT, 38440 Wolfsburg (DE)
(72) Erfinder: MAUTERER, Thomas, 38102 Braunschweig (DE)
(86) Internationale Anmeldenummer: PCT/EP2019/061619
(87) Internationale Veröffentlichungsnummer: WO 2019/223995

(56) Entgegenhaltungen:
- DE-A1-102005 013 440
- DE-A1-102012 206 772
- DE-A1-102016 007 988

## Beschreibung

Die Erfindung betrifft eine Bordnetzvorrichtung zum Versorgen von zumindest zwei elektrischen Verbrauchern in einem Kraftfahrzeug. Die Verbraucher können über die Bordnetzvorrichtung mit einer elektrischen Bordnetzspannung aus einer Spannungsquelle versorgt werden. Die Erfindung umfasst auch ein Kraftfahrzeug mit der Bordnetzvorrichtung sowie eine Umschaltvorrichtung, die wichtiger Bestandteil der Bordnetzvorrichtung ist. Schließlich umfasst die Erfindung auch ein Verfahren zum Betreiben der Bordnetzvorrichtung.

Mittels der besagten Bordnetzvorrichtung kann in einem Kraftfahrzeug ein sogenanntes Bordnetz bereitgestellt werden, also eine elektrische Verteilungseinrichtung, um eine Bordnetzspannung aus einer Spannungsquelle hin zu zumindest zwei elektrischen Verbrauchern zu übertragen. In einem Kraftfahrzeug kann beispielsweise ein 12-Volt-Bordnetz bereitgestellt sein, in welchem dann die Bordnetzspannung einen Nennwert von 12 Volt aufweist. Andere bekannte Typen von Bordnetzen sind ein 48-Volt-Bordnetz und ein Hochvolt-Bordnetz, wobei in letzerem eine Bordnetzspannung von größer als 60 Volt, insbesondere größer als 100 Volt, vorgesehen sein kann.

Durch die Bordnetzvorrichtung sind also die Spannungsquelle und die elektrischen Verbraucher miteinander elektrisch gekoppelt. Kommt es aber zu einem Fehler in einem der elektrischen Verbraucher, beispielsweise zu einem Kurzschluss, so sind hierdurch auch die Spannungsquelle und jeder übrige Verbraucher betroffen. Dies ist insbesondere unerwünscht bei elektrischen Verbrauchern, die für die Fahrtüchtigkeit des Kraftfahrzeugs relevant sind. Wird aufgrund eines Fehlers in der Bordnetzvorrichtung ein solcher Verbraucher betriebsunfähig, so wird das gesamte Kraftfahrzeug fahrunfähig. In diesem Zusammenhang ist bekannt, in einem Kraftfahrzeug eine redundante elektrische Versorgung für einige elektrische Verbraucher vorzusehen. Allerdings ist dies mit höheren Bauteilkosten verbunden, insbesondere dann, wenn zwei Spannungsquellen vorgesehen sein sollen.

In Bezug auf das Erkennen eines Fehlers in einer Bordnetzvorrichtung ist aus der DE 10 2010 014 070 A1 ein Prüfverfahren bekannt, das mittels eines Modells einer Batterie eine Prüfung in einem Hybridfahrzeug durchführen kann.

In Bezug auf die Prüfung eines Abschaltpfads für eine Energieversorgung ist aus der DE 10 2012 209 144 A1 ein Test für einen solchen Abschaltpfad bekannt, mit dem sichergestellt werden kann, dass eine Spannungsquelle in dem Kraftfahrzeug zuverlässig abgeschaltet wird.

Aus der WO 2015/071045 A1 ist bekannt, in einem Kraftfahrzeug eine elektrische Quelle mit elektrischen Verbrauchern über einen Modulator zur Leistungsmodulation und einen Demultiplexer zum Umschalten zwischen den Verbrauchern zu koppeln, um nur einen Modulator für mehrere Verbraucher bereitstellen zu müssen. Es ist dabei vorgesehen, jeweils nur einen der Verbraucher zurzeit zu betreiben. Sollen mehrere Verbraucher zugleich betrieben werden, so werden entsprechend viele Modulatoren und/oder Demultiplexer, jeweils einer pro gleichzeitig zu betreibendem Verbraucher, bereitgestellt.

Aus der US 2011/0273012 A1 ist bekannt, in einem elektrischen Flugzeug die Generatoren für Elektrizität über einen elektrischen Leistungsbus mit elektrischen Invertern zu verbinden und dann weiter die Inverter mittels eines elektrischen Routings wahlweise mit unterschiedlichen Verbrauchern zu verbinden. Mittels des Routings werden diejenigen Verbraucher versorgt, die aktuell Energie benötigen, während die übrigen Verbraucher unversorgt bleiben.

Aus der DE 10 2015 012 944 A1 ist bekannt, dass ein elektrischer Verbraucher immer dann, wenn es zu einem Fehler in seinem Standard-Versorgungszweig kommt, auf einen anderen Versorgungszweig umschalten kann.

Aus der DE 103 48 162 B3 ist bekannt, sicherheitsrelevante Verbraucher in einem Kraftfahrzeug über zwei unterschiedliche Zweige mit jeweils einer elektrischen Quelle zu verbinden, sodass bei Ausfall eines der Zweige oder einer der Quellen unmittelbar eine Versorgung über den verbleibenden Zweig erfolgen kann. In jedem der Zweige kann zusätzlich dauerhaft eine Energiespeichereinrichtung bereitgestellt sein.

Das Dokument DE 10 2012 206 772 A1 beschreibt ein Kraftfahrzeug mit Teilbordnetzen, wobei in einem ersten Teilbordnetz eine erste Gruppe von Verbrauchern und ein Bordnetzspeicher durch einen ersten Schalter voneinander getrennt werden können und in dem zweiten Teilbordnetz eine zweite Gruppe von Verbrauchern zusammen mit einem Stützspeichermodul angeschlossen ist. Sowohl die erste Verbrauchergruppe des ersten Teilbordnetzes als auch die zweite Verbrauchergruppe des zweiten Teilbordnetzes ist permanent mit einer Spannungsquelle elektrisch verbunden, wobei das erste Teilbordnetz direkt und das zweite Teilbordnetz über einen Gleichspannungsteller dauerhaft mit der Spannungsquelle verbunden ist.

Das Dokument DE 10 2005 013 440 A1 beschreibt zwei Bordnetze, die über ein Ladetrennmodul mit einem gemeinsamen Generator G verschaltet sind. Jedes Bordnetz weist einen eigenen Energiespeicher auf, der das Bordnetz weiter versorgt, wenn sich das Bordnetz mittels seines Ladetrennmoduls vom Generator trennt.

Das Dokument DE 10 2016 007 988 A1 beschreibt zwei Bordnetze, die elektrisch doppelt gekoppelt sind, nämlich einmal über einen Spannungswandler und einmal über einen Schalter.

Der Erfindung liegt die Aufgabe zugrunde, in einem Kraftfahrzeug die Auswirkung eines Fehlers in einer Bordnetzvorrichtung dahingehend zu begrenzen, dass nicht alle elektrischen Verbraucher von dem Fehler in ihrer Funktionsweise beeinträchtigt werden.

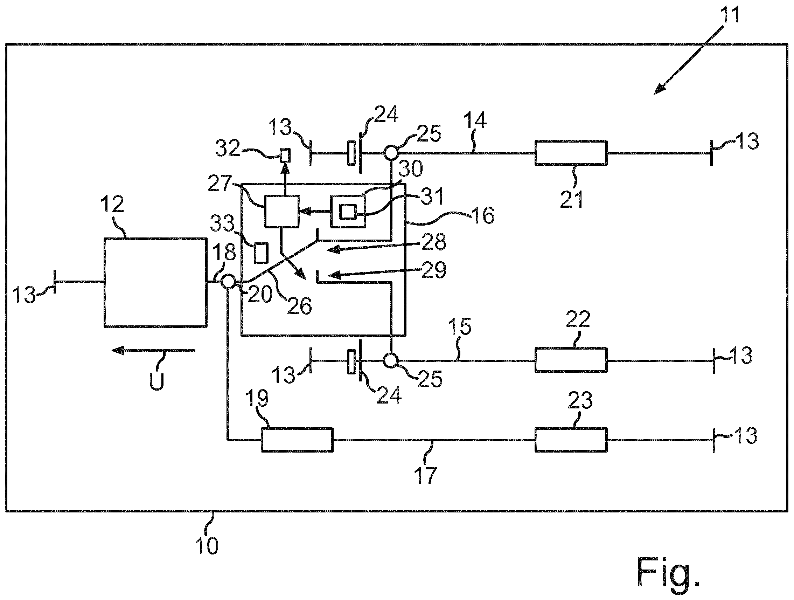

Die Aufgabe wird durch die Gegenstände der unabhängigen Patentansprüche gelöst. Vorteilhafte Ausführungsformen der Erfindung sind durch die abhängigen Patentansprüche, die folgende Beschreibung sowie die Figur beschrieben.

Durch die Erfindung ist eine elektrische Bordnetzvorrichtung bereitgestellt, durch welche zumindest zwei elektrische Verbraucher in einem Kraftfahrzeug mit einer Bordnetzspannung versorgt werden können. Die Bordnetzvorrichtung weist eine Anschlusseinrichtung zum Empfangen der Bordnetzspannung aus einer Spannungsquelle auf. Mittels der Anschlusseinrichtung kann die Bordnetzspannung also mit der Spannungsquelle elektrisch verbunden werden. Die Bordnetzspannung ist insbesondere eine Gleichspannung. Beispielsweise kann die Bordnetzspannung einen Nennwert von 12 Volt aufweisen.

Ein Bordnetzzweig der Bordnetzvorrichtung ist zum Anschließen eines oder einiger der besagten Verbraucher sowie zum Weiterleiten der Bordnetzspannung an jedem der angeschlossenen Verbraucher ausgestaltet. Der Bordnetzzweig kann beispielsweise auf der Grundlage zumindest eines Kabels und/oder zumindest einer Stromschiene realisiert sein. An den Bordnetzzweig sind nicht alle Verbraucher angeschlossen, sondern nur einer oder einige der Verbraucher. Der Bordnetzzweig ist im Folgenden als erster Bordnetzzweig bezeichnet.

Um den Einfluss eines elektrischen Fehlers in der Bordnetzvorrichtung zu vermindern, ist nämlich in der Bordnetzvorrichtung ein zweiter Bordnetzzweig bereitgestellt, an welchen jeder übrige Verbraucher angeschlossen werden kann. Der zweite Bordnetzzweig ist dazu ausgestaltet, die Bordnetzspannung an jeden der übrigen Verbraucher weiterzuleiten, also an jeden Verbraucher, der an den zweiten Bordnetzzweig angeschlossen ist. Auch der zweite Bordnetzzweig kann in der beschriebenen Weise auf der Grundlage zumindest eines Kabels und/oder zumindest einer Stromschiene realisiert sein. Bei der Bordnetzvorrichtung gibt es also eine Anschlusseinrichtung und zwei Bordnetzzweige.

Bei der Bordnetzvorrichtung ist nun die Anschlusseinrichtung mit dem ersten Bordnetzzweig und mit dem zweiten Bordnetzzweig über ein Schaltelement oder mehrere Schaltelemente einer Umschaltvorrichtung verbunden. Die Umschaltvorrichtung ist also zwischen die Anschlusseinrichtung einerseits und die beiden Bordnetzzweige andererseits geschaltet. Mittels der Umschaltvorrichtung kann zwischen den beiden Bordnetzzweigen umgeschaltet werden, indem das zumindest eine Schaltelement angesteuert wird oder sein Schaltzustand verändert wird. Somit ist die Anschlusseinrichtung (und damit die Spannungsquelle) in einer ersten Schaltstellung des zumindest einen Schaltelements mit dem ersten Bordnetzzweig und in einer zweiten Schaltstellung des zumindest einen Schaltelements mit dem zweiten Bordnetzzweig elektrisch gekoppelt. Der jeweils andere Bordnetzzweig ist dagegen währenddessen von der Anschlusseinrichtung (und damit von der Spannungsquelle) elektrisch entkoppelt. Bei der Bordnetzvorrichtung ist eine Steuereinrichtung der Umschaltvorrichtung dazu eingerichtet, die Anschlusseinrichtung abwechselnd mit dem ersten Bordnetzzweig und mit dem zweiten Bordnetzzweig durch Umschalten des zumindest einen Schaltelements elektrisch zu koppeln. Während einer der Bordnetzzweige mit der Anschlusseinrichtung elektrisch gekoppelt ist, ist in der besagten Weise der jeweils andere Bordnetzzweig von der Anschlusseinrichtung elektrisch entkoppelt. Die Bordnetzspannung aus der Spannungsquelle wird also zu jedem Zeitpunkt nur in einen der beiden Bordnetzzweige übertragen oder weitergeleitet.

Durch die Erfindung ergibt sich der Vorteil, dass für den Fall, dass ein elektrischer Verbraucher einen elektrischen Fehler in der Bordnetzvorrichtung erzeugt, dieser Fehler nur eine Auswirkung auf denjenigen Bordnetzzweig hat, an welchen der defekte elektrische Verbraucher angeschlossen ist. Durch die beschriebene elektrische Verschaltung sind die beiden Bordnetzzweige zu keinem Zeitpunkt elektrisch miteinander gekoppelt. Somit kann ein elektrischer Fehler in einem Bordnetzzweig nie die elektrischen Verbraucher oder den elektrischen Verbraucher des anderen Bordnetzzweiges beeinträchtigen. Damit ist sichergestellt, dass nicht alle elektrischen Verbraucher, die an der Bordnetzvorrichtung angeschlossen sind, von einem elektrischen Fehler betroffen sein können.

Die Erfindung sieht vor, dass an jeden Bordnetzzweig ein jeweiliger elektrischer Pufferspeicher angeschlossen ist, welcher im Betrieb des Kraftfahrzeugs für jeden jeweils angeschlossenen Verbraucher elektrische Energie bereitstellt, während das zumindest eine Schaltelement die Anschlusseinrichtung mit dem anderen Bordnetzzweig verbindet. Als Pufferspeicher kann beispielsweise ein elektrischer Akkumulator, beispielsweise eine Lithium-Ionen-Batterie und/oder eine Bleisäure-Batterie, und/oder eine Anordnung mit zumindest einem elektrischen Kondensator bereitgestellt sein. Der Pufferspeicher in jedem Bordnetzzweig weist den Vorteil auf, dass jeder an dem Bordnetzzweig angeschlossene elektrische Verbraucher durchgehend mit elektrischer Energie versorgt werden kann. Der Pufferspeicher kann jedes Mal dann nachgeladen werden, wenn das zumindest eine Schaltelement auf den Bordnetzzweig umgeschaltet ist.

Die Erfindung umfasst auch Ausführungsformen, durch die sich zusätzliche Vorteile ergeben.

Eine Ausführungsform sieht vor, dass die Umschaltvorrichtung auch eine Prüfeinrichtung umfasst, die dazu eingerichtet ist, für den Fall, dass das zumindest eine Schaltelement die Anschlusseinrichtung mit einem der Bordnetzzweige verbindet, also auf einen der Bordnetzzweige geschaltet ist, währenddessen in dem anderen Bordnetzzweig ein vorbestimmtes In-Ordnung-Kriterium zu prüfen. Das In-Ordnung-Kriterium kann beispielsweise diejenigen elektrischen Bedingungen beschreiben, die anzeigen, dass der Bordnetzzweig kurzschlussfrei oder fehlerfrei ist. Die Steuereinrichtung ist dazu eingerichtet, das zumindest eine Schaltelement auf diesen anderen Bordnetzzweig nur in dem Fall umzuschalten, dass die Prüfeinrichtung signalisiert, dass das In-Ordnung-Kriterium in dem anderen Bordnetzzweig erfüllt ist. Falls also vor dem Umschalten bereits erkannt wird, dass in dem anderen Bordnetzzweig das In-Ordnung-Kriterium verletzt ist, also beispielsweise ein Kurzschluss vorliegt oder ein Lichtbogen, so kann in diesem Fall verhindert werden, dass das zumindest eine Schaltelement auf diesen anderen Bordnetzzweig umgeschaltet wird und somit dann nämlich der Fehler des anderen Bordnetzzweigs auch auf die Spannungsquelle rückwirken könnte. Die Prüfeinrichtung kann in an sich bekannter Weise ausgestaltet sein, um einen elektrischen Fehler in dem jeweiligen Bordnetzzweig zu detektieren.

Falls der elektrische Fehler dagegen in demjenigen Bordnetzzweig entsteht, auf welchen das zumindest eine Schaltelement gerade geschaltet ist, sieht eine Ausführungsform vor, dass für eben diesen Fall, dass die Prüfeinrichtung signalisiert, dass das In-Ordnung-Kriterium in demjenigen der Bordnetzzweige verletzt ist, auf welchen das zumindest eine Schaltelement aktuell geschaltet ist, also die Spannungsquelle mit eben diesem Bordnetzzweig elektrisch gekoppelt ist, dann das zumindest eine Schaltelement auf den anderen Bordnetzzweig umzuschalten, was durch die Steuereinrichtung ausgelöst wird. Es wird also von demjenigen Bordnetzzweig weggeschaltet, in welchem das In-Ordnung-Kriterium verletzt ist. Hierdurch wird dieser Bordnetzzweig von der Spannungsquelle getrennt und somit die Auswirkung des elektrischen Fehlers gemindert, beispielsweise ein Stromfluss durch den Bordnetzzweig verringert.

Eine Ausführungsform sieht vor, dass das In-Ordnung-Kriterium umfasst, dass in dem jeweiligen Bordnetzzweig, in welchem das In-Ordnung-Kriterium durch die Prüfeinrichtung überprüft wird, eine Stromstärke kleiner als ein vorbestimmter Höchstwert ist und/oder durchgehend seit dem letzten Umschalten des zumindest einen Schaltelements kleiner als der Höchstwert gewesen ist. Es wird also eine zeitlich punktuelle Prüfung oder eine Prüfung für einen Zeitraum durchgeführt. Durch Überwachen der Stromstärke kann ein Kurzschluss und/oder ein Lichtbogen erkannt werden. Zusätzlich oder alternativ dazu kann das In-Ordnung-Kriterium umfassen, dass eine Zweigspannung in dem Bordnetzzweig, also die elektrische Spannung des Bordnetzzweiges, größer als ein vorbestimmter Mindestwert ist und/oder durchgehend seit dem letzten Umschalten des zumindest einen Schaltelements gewesen ist. Auch hier wird die Zweigspannung zeitlich punktuell erfasst oder über einen Zeitraum beobachtet. Durch das Überwachen des Zeitraums ist jeweils der Vorteil gegeben, dass auch ein kurzzeitig auftretender Fehler erkannt wird und eine Auswirkung auf die Entscheidung betreffend das Umschalten des zumindest einen Schaltelements hat. Zusätzlich oder alternativ dazu kann das In-Ordnung-Kriterium umfassen, dass jeder angeschlossene Verbraucher einen fehlerfreien Betriebszustand signalisieren muss. Hierdurch wird in vorteilhafter Weise die Eigendiagnose jedes elektrischen Verbrauchers durch die Prüfeinrichtung genutzt.

Eine Ausführungsform sieht vor, dass die Steuereinrichtung dazu eingerichtet ist, im Falle, dass das In-Ordnung-Kriterium verletzt ist, ein Notlaufsignal zu erzeugen. Mittels des Notlaufsignals kann in einem Kraftfahrzeug also eine Anpassung von dessen Betriebsweise an dem erkannten elektrischen Fehler ausgelöst werden.

Eine Ausführungsform sieht vor, dass die Steuereinrichtung der Umschaltvorrichtung dazu eingerichtet ist, das zumindest eine Schaltelement immer dann umzuschalten, falls eine Restmenge an Energie im Pufferspeicher desjenigen Bordnetzzweigs, zu welchem hin umgeschaltet werden soll, kleiner als eine vorbestimmte Mindestmenge ist. Die Häufigkeit oder Rate des Umschaltens wird also bestimmt durch den jeweiligen Speicherzustand oder die Restmenge im Pufferspeicher desjenigen Bordnetzzweiges, der gerade von der Spannungsquelle entkoppelt ist. Somit wird die Umschaltrate an den Leistungsbedarf der Verbraucher in den beiden Bordnetzzweigen in vorteilhafter Weise angepasst. Dies minimiert die Schalthäufigkeit und kann somit zur Verschleißminderung beitragen. Die Restmenge in einem Pufferspeicher kann mit an sich bekannten schaltungstechnischen Maßnahmen ermittelt werden und/oder zum Beispiel anhand einer von dem Pufferspeicher in dem Bordnetzzweig erzeugten Zweigspannung ermittelt werden. Sinkt die Zweigspannung unter einen Schwellenwert, so kann dies als Auslöser für das Umschalten genutzt werden. Zusätzlich oder alternativ dazu kann vorgesehen sein, dass das Umschalten mit einer vorbestimmten Umschaltfrequenz oder Umschaltrate erfolgt, die in einem Bereich von 10 Hertz bis einmal pro Minute liegen kann. Die Kombination mit dem Schwellenwert sieht dabei vor, dass unabhängig von dem Schwellenwert also auf jeden Fall mit der Umschaltrate umgeschaltet wird. Ist dagegen die Zweigspannung schon vor dem Ende eines Umschaltzyklus (Inverser Wert zur Umschaltrate) unter den Schwellenwert abgesunken, wird vor dem Ende des Umschaltzyklus umgeschaltet.

Eine Ausführungsform sieht vor, dass die Umschaltvorrichtung gemäß dem Standard ASIL (Automotive Safety Integrity Level), insbesondere ASIL-C oder ASIL-D, ausgestaltet ist. Hierzu muss lediglich der ASIL auf das "Nicht-Schalten" garantiert sein für den Fall, dass das In-Ordnung-Kriterium im anderen Bordnetzzweig, auf welchen umgeschaltet werden soll, verletzt ist, wenn also ein Fehler in jenem Bordnetzzweig vorliegt. Dies ist technisch besonders einfach zu realisieren und ermöglicht dennoch, dass die Bordnetzvorrichtung eine ASIL-Zulassung erhält.

Eine Ausführungsform sieht vor, dass noch ein zusätzlicher Bordnetzzweig vorgesehen ist, der aber über ein Sicherungselement mit einer Verbindungsstelle elektrisch verbunden ist, die zwischen der Anschlusseinrichtung und der Umschaltvorrichtung angeordnet ist. Es handelt sich also um einen Nebenzweig, der aus Sicht der Spannungsquelle oder aus Sicht von deren Anschlusseinrichtung elektrisch vor der Umschaltvorrichtung angeschlossen ist, nämlich an der besagten Verbindungsstelle. An einen solchen zusätzlichen Bordnetzzweig können all jene elektrischen Verbraucher oder ein solch elektrischer Verbraucher angeschlossen sein, der nicht die Absicherung durch die beiden Bordnetzzweige benötigt.

Es kann sich um einen sogenannten QM-Verbraucher handeln, wie er im Rahmen des ASIL-Standards definiert ist. Das Sicherungselement, über welches der zusätzliche Bordnetzzweig mit der Verbindungsstelle elektrisch verbunden ist, ist dazu eingerichtet, diese elektrische Verbindung zur Verbindungsstelle zu unterbrechen, falls ein in den zusätzlichen Bordnetzzweig fließender elektrischer Strom größer als eine Auslöseschwelle ist. Das Sicherungselement kann beispielsweise als Schmelzsicherung oder als elektrischer Schalter mit Stromstärkeüberwachung ausgestaltet sein. Ein Kurzschluss in dem zusätzlichen Bordnetzzweig führt also dazu, dass dieser zusätzliche Bordnetzzweig durch das Sicherungselement von der Spannungsquelle elektrisch entkoppelt wird. Somit kann also auch ein elektrischer Fehler in diesem zusätzlichen Bordnetzzweig keinen Einfluss auf die elektrischen Verbraucher, die jenseits der Umschaltvorrichtung an dem ersten und dem zweiten Bordnetzzweig angeschlossen sind, entfalten.

Eine Ausführungsform sieht vor, dass die Steuereinrichtung der Umschaltvorrichtung dazu eingerichtet ist, nach dem Umschalten des zumindest einen Schaltelements dessen dann neuen Schaltzustand jeweils für eine vorbestimmte Mindestzeitdauer zu halten. Hierdurch werden Umschaltzyklen und/oder Umladezyklen beispielsweise bei Pufferspeichern der Bordnetzzweige, in der Anzahl reduziert. Dies verringert in vorteilhafter Weise deren Verschleiß.

Eine Ausführungsform sieht vor, dass ein an den ersten Bordnetzzweig angeschlossener Verbraucher eine erste Teilsteuerung einer Fahrzeugfunktion, beispielsweise einer Fahrzeuglenkung, und ein an dem zweiten Bordnetzzweig angeschlossener übriger Verbraucher eine zweite Teilsteuerung derselben Fahrzeugfunktion, also beispielsweise der Fahrzeuglenkung, ist. Die Fahrzeugfunktion ist dabei derart ausgestaltet, dass sie auch mit nur einer der beiden Teilsteuerungen weiter betrieben werden kann, eventuell in einem Notlaufbetrieb, der durch das besagte Notlaufsignal ausgelöst werden kann. Somit ergibt sich also der Vorteil, dass bei einem elektrischen Fehler in einem der Bordnetzzweige durch Weiter-Versorgen des anderen Bordnetzzweiges mit der Bordnetzspannung die Fahrzeugfunktion durchgehend weiter betrieben werden kann. Hierdurch können z.B. sogenannte sicherheitsrelevante Fahrzeugfunktionen, wie beispielsweise Fahrzeuglenkung und/oder Bremssteuerung und/oder Umgebungsüberwachung, auch bei einem elektrischen Fehler in der Bordnetzvorrichtung zuverlässig weiterbetrieben werden.

Eine Ausführungsform sieht vor, dass die Spannungsquelle durch einen Generator und/oder durch eine über einen Gleichspannungswandler angeschlossene weitere Bordnetzvorrichtung bereitgestellt ist. Als Generator kann beispielsweise ein Riemen-Starter-Generator oder eine sogenannte Lichtmaschine (12-Volt-Generator) vorgesehen sein. Über einen Gleichspannungswandler kann zusätzlich oder alternativ dazu eine weitere Bordnetzvorrichtung angeschlossen sein, beispielsweise ein Hochvolt-Bordnetz oder ein 48-Volt-Bordnetz. In vorteilhafter Weise sind also die generativen Spannungserzeuger, nämlich die Spannungsquelle, von dem ersten und dem zweiten Bordnetzzweig mittels der Umschaltvorrichtung trennbar. In jedem Bordnetzzweig ist bevorzugt als weiterer Spannungserzeuger nur ein Pufferspeicher vorgesehen, also ein sich einem Kurzschluss selbst erschöpfender Energiespeicher, aber kein generativer Spannungserzeuger. Somit wird bei einem Kurzschluss in einem Bordnetzzweig die darin umgesetzte elektrische Energie begrenzt.

Die Erfindung umfasst gemäß einem Aspekt auch ein Kraftfahrzeug, welches dadurch gekennzeichnet ist, dass es eine Ausführungsform der erfindungsgemäßen Bordnetzvorrichtung aufweist. In dem Kraftfahrzeug können damit mehrere Verbraucher auf zwei Bordnetzzweige aufgeteilt werden, sodass im Falle eines elektrischen Fehlers nicht alle der an die Bordnetzzweige angeschlossenen Verbraucher von diesem elektrischen Fehler beeinträchtigt, sondern nur diejenigen, die an demjenigen Bordnetzzweig angeschlossen sind, in welchem der elektrische Fehler auftritt. Zudem kann vermieden werden, dass der elektrische Fehler eine Rückwirkung auf die Spannungsquelle entfaltet.

Im Zusammenhang mit der Erfindung ist unter einem Kraftfahrzeug bevorzugt ein Kraftwagen, insbesondere ein Personenkraftwagen oder Lastkraftwagen, gemeint.

Um in einem Kraftfahrzeug eine Bordnetzvorrichtung der beschriebenen Art bereitstellen zu können, ist eine Umschaltvorrichtung für die Bordnetzvorrichtung bereitgestellt. Die erfindungsgemäße Umschaltvorrichtung weist zumindest ein Schaltelement und eine Steuereinrichtung auf. Jedes Schaltelement kann beispielsweise auf der Grundlage eines Halbleiterschalters, insbesondere eines Transistors, oder einer Schaltung aus mehreren parallel geschalteten solchen Halbleitern, gebildet sein. Die Steuereinrichtung kann beispielsweise auf der Grundlage zumindest eines Mikrocontrollers realisiert sein. Das zumindest eine Schaltelement ist dazu eingerichtet, eine Anschlusseinrichtung der Bordnetzvorrichtung mit einem ersten Bordnetzzweig und einem zweiten Bordnetzzweig über das zumindest eine Schaltelement zu verbinden. Eine Anschlusseinrichtung kann beispielsweise auf der Grundlage eines Kabels und/oder einer Stromschiene realisiert sein. Die Anschlusseinrichtung kann zusätzlich oder alternativ dazu auf der Grundlage eines elektrischen Kontaktelements, wie beispielsweise eines Steckers oder einer Buchse oder einer Schraube, realisiert sein. Jeder Bordnetzzweig kann in der beschriebenen Weise ausgestaltet sein. Die besagte Steuereinrichtung der Umschaltvorrichtung ist dazu eingerichtet, die Anschlusseinrichtung abwechselnd mit dem ersten Bordnetzzweig und dem zweiten Bordnetzzweig durch Umschalten des zumindest einen Schaltelements elektrisch zu koppeln. Somit ist also stets nur einer der Bordnetzzweige mit der Anschlusseinrichtung verbunden, während der andere Bordnetzzweig von der Anschlusseinrichtung elektrisch entkoppelt ist. Durch das elektrische Koppeln ist eine galvanische Verbindung zwischen der Anschlusseinrichtung und dem jeweiligen Bordnetzzweig bereitgestellt. Durch das Entkoppeln ist ein Stromfluss zwischen der Anschlusseinrichtung und dem jeweiligen Bordnetzzweig blockiert.

Die Erfindung umfasst gemäß einem Aspekt schließlich auch ein Verfahren zum Betreiben einer Ausführungsform der erfindungsgemäßen Bordnetzvorrichtung. Die Anschlusseinrichtung der Bordnetzvorrichtung empfängt eine Bordnetzspannung aus einer Spannungsquelle. Die Bordnetzspannung ist insbesondere eine Gleichspannung. Die Bordnetzspannung kann in einem Bereich von 9 Volt bis 60 Volt liegen, nur um ein Beispiel zu nennen. An einem ersten Bordnetzzweig sind ein oder einige von zumindest zwei Verbrauchern angeschlossen. An einem zweiten Bordnetzzweig ist jeder übrige dieser Verbraucher angeschlossen. Die Verbraucher sind also auf die beiden Bordnetzzweige aufgeteilt. Die Anschlusseinrichtung ist über zumindest ein Schaltelement der Umschaltvorrichtung sowohl mit dem ersten Bordnetzzweig als auch mit dem zweiten Bordnetzzweig verbunden. Die Steuereinrichtung der Umschaltvorrichtung koppelt die Anschlusseinrichtung abwechselnd mit dem ersten Bordnetzzweig und dem Bordnetzzweig durch Umschalten des zumindest einen Schaltelements. Somit wird die Bordnetzspannung abwechselnd an jeden angeschlossenen Verbraucher des ersten Bordnetzzweiges und des zweiten Bordnetzzweiges weitergeleitet.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Kraftfahrzeugs beschrieben worden sind. Aus diesem Grund sind die entsprechenden Weiterbildungen des erfindungsgemäßen Verfahrens hier nicht noch einmal beschrieben.

Die Erfindung umfasst auch die Kombinationen der Merkmale der beschriebenen Ausführungsformen.

Im Folgenden sind Ausführungsbeispiele der Erfindung beschrieben. Hierzu zeigt die einzige Figur:
- Fig.: eine schematische Darstellung einer Ausführungsform des erfindungsgemäßen Kraftfahrzeugs, in welchem eine Ausführungsform des erfindungsgemäßen Verfahrens durchgeführt werden kann.

Bei dem im Folgenden erläuterten Ausführungsbeispiel handelt es sich um eine bevorzugte Ausführungsform der Erfindung.

Die Figur zeigt ein Kraftfahrzeug 10, bei dem es sich um einen Kraftwagen, insbesondere einen Personenkraftwagen oder Lastkraftwagen, handeln kann. Von dem Kraftfahrzeug 10 ist eine Bordnetzvorrichtung 11 dargestellt, die ein Bordnetz des Kraftfahrzeugs 10 realisieren kann. Die Bordnetzvorrichtung 11 kann beispielsweise ein Bordnetz für eine elektrische Gleichspannung kleiner als 60 Volt, beispielsweise mit einem Nennwert von 12 Volt, sein. Für die Bordnetzvorrichtung 11 kann eine Spannungsquelle 12 eine Bordnetzspannung U bereitstellen. Die Spannungsquelle 12 kann beispielsweise ein Generator und/oder einen Gleichspannungswandler umfassen. Die Bordnetzspannung U kann bezüglich eines Bezugspotentials 13, beispielsweise einem Massepotential oder einer Fahrzeugmasse, erzeugt sein. Von der Bordnetzvorrichtung 11 sind des Weiteren ein erster Bordnetzzweig 14 und ein zweiter Bordnetzzweig 15 sowie ein weiterer Bordnetzzweig 17 dargestellt. Die Bordnetzzweige 14, 15 können über eine Umschaltvorrichtung 16 mit einer Anschlusseinrichtung 18 verbunden sein, die wiederum mit der Spannungsquelle 12 zum Empfangen der Bordnetzspannung U verbunden sein kann.

Der weitere Bordnetzzweig 17 kann über ein Sicherungselement 19, beispielsweise eine Schmelzsicherung, an einer Verbindungsstelle 20 der Anschlusseinrichtung 18 direkt angeschlossen sein, wobei "direkt" heißt, noch vor der Umschaltvorrichtung 16 oder mit anderen Worten zwischen die Spannungsquelle 12 und die Umschaltvorrichtung 16. Der weitere Bordnetzzweig 17 ist somit von Umschaltvorgängen in der Umschaltvorrichtung 16 unabhängig.

An die Bordnetzzweige 14, 15 sind elektrische Verbraucher 21, 22 angeschlossen. Die Gruppe der Verbraucher 21, 22 kann beispielsweise für den Fahrbetrieb des Kraftfahrzeugs 10 relevante elektrische Verbraucher darstellen, beispielsweise eine Fahrzeuglenkung und/oder Bremssteuerung und/oder Umgebungsüberwachung. In dem weiteren Bordnetzzweig 17 kann zumindest ein weiterer Verbraucher 23 angeschlossen sein, der beispielsweise ein Infotainmentsystem (Informations-Unterhaltungssystem), eine Sitzheizung, ein Lüftungsgebläse und/oder eine Innenbeleuchtung umfassen kann, also insbesondere nur für den Fahrbetrieb irrelevante Verbraucher.

In jedem der Bordnetzzweige 14, 15, die über die Umschaltvorrichtung 16 mit der Spannungsquelle 12 verbunden sind, kann ein elektrischer Pufferspeicher 24 vorgesehen sein, der beispielsweise einen elektrischen Akkumulator, beispielsweise eine Lithium-Ionen-Batterie, und/oder zumindest einen Kondensator umfassen kann. Die Umschaltvorrichtung 16 kann an einer jeweiligen elektrischen Klemme 25 mit dem jeweiligen Bordnetzzweig 14, 15 elektrisch verbunden sein.

Die Umschaltvorrichtung 16 kann zumindest ein Schaltelement 26 aufweisen, bei dem es sich beispielsweise um einen Halbleiterschalter, beispielsweise einen Transistor, oder eine Halbleiterschaltung mit mehr als einem Halbleiterschalter, handeln kann. Eine Steuereinrichtung 27 der Umschaltvorrichtung 16 kann das zumindest eine Schaltelement 26 umschalten. In einem ersten Schaltzustand 28 kann dabei die Anschlusseinrichtung 18 und damit die Spannungsquelle 12 mit dem ersten Bordnetzzweig 14 elektrisch gekoppelt sein, sodass die Bordnetzspannung U in den ersten Bordnetzzweig 14 übertragen wird. Der zweite Bordnetzzweig 15 ist dabei von der Bordnetzspannung U entkoppelt. In einem zweiten Schaltzustand 29 kann anders herum die Anschlusseinrichtung 18 und damit die Spannungsquelle 12 mit dem zweiten Bordnetzzweig 15 elektrisch gekoppelt sein, sodass die Bordnetzspannung U in den zweiten Bordnetzzweig 15 geleitet wird. Der erste Bordnetzzweig 14 ist währenddessen von der Bordnetzspannung U entkoppelt. Dennoch können durchgehend die Verbraucher 21 und 22 beider Bordnetzzweige 14, 15 elektrisch versorgt werden. Dies wird im entkoppelten Zustand des jeweiligen Bordnetzzweiges 14, 15 durch den Pufferspeicher 24 des jeweiligen Bordnetzzweiges 14, 15 gewährleistet.

Die Umschaltvorrichtung 16 kann eine Prüfeinrichtung 30 umfassen, die dazu eingerichtet ist, während das zumindest eine Schaltelement 26 die Anschlusseinrichtung 18 mit einem der Bordnetzzweige 14 verbindet, in dem anderen Bordnetzzweig 15 ein vorbestimmtes In-Ordnung-Kriterium 31 zu prüfen, was bedeutet, es wird geprüft, ob in dem anderen Bordnetzzweig, auf welchen umgeschaltet werden soll, ein vorbestimmter, fehlerfreier Zustand vorliegt. Die Steuereinrichtung 27 kann dazu eingerichtet sein, das zumindest eine Schaltelement 26 auf den anderen Bordnetzzweig 15 nur in dem Fall umzuschalten, dass die Prüfeinrichtung 30 signalisiert, dass das In-Ordnung-Kriterium 31 in dem anderen Bordnetzzweig 15 erfüllt ist.

Für den Fall, dass die Prüfeinrichtung 30 signalisiert, dass das In-Ordnung-Kriterium 31 in einem der Bordnetzzweige 14, 15 verletzt ist, während das zumindest eine Schaltelement 26 auf diesen Bordnetzzweig 14, 15 geschaltet ist, kann die Steuereinrichtung 27 das zumindest eine Schaltelement auf den anderen Bordnetzzweig 14, 15 umschalten.

Liegt also ein Fehlerzustand vor, insbesondere ein Kurzschluss und/oder ein Lichtbogen, so wird nicht auf diesen Bordnetzzweig umgeschaltet, der das In-Ordnung-Kriterium 31 verletzt. Entsteht also in einem der Bordnetzzweige 14, 15 ein elektrischer Fehler, so bleibt dieser Bordnetzzweig dauerhaft von der Spannungsquelle 12 elektrisch entkoppelt.

Die Verbraucher 21, 22 bieten dabei jeweils bevorzugt eine Teilsteuerung ein und derselben Fahrzeugfunktion, sodass immer zwei Teilsteuerungen für eine Fahrzeugfunktion bereitgestellt sind und jede der Teilsteuerungen an einem anderen Bordnetzzweig 14, 15 angeschlossen ist. Ein Ausfall eines Bordnetzzweiges 14, 15 ermöglicht es dadurch, mit der verbleibenden weiteren Teilsteuerung die Fahrzeugfunktion weiterhin zumindest in einem Notfallmodus weiterzubetreiben. Entsprechend kann vorgesehen sein, dass die Steuereinrichtung 27 für den Fall, dass das In-Ordnung-Kriterium 31 verletzt ist, ein Notlaufsignal 32 ausgibt, welches beispielsweise der Fahrzeugfunktion signalisiert, in einen Notlaufmodus oder Notfallmodus umzuschalten.

Die Bordnetzvorrichtung 11 kann somit auch solche Fahrzeugfunktionen versorgen, die eine Anforderung an einen ASIL, insbesondere ASIL-C und/oder ASIL-D, auf die Energieversorgung erfordern.

Vor dem Wechsel oder Umschalten der Bordnetzspannung U auf eine anderen Bordnetzzweig 14, 15, kann hierbei nun überprüft werden, ob ein elektrischer Fehler auf der jeweiligen Klemme 25 vorliegt.

Ist dies der Fall, ist also das In-Ordnung-Kriterium 31 verletzt, wird kein Umschalten oder Wechsel durchgeführt. Stattdessen kann das Notlaufsignal 32 erzeugt werden.

Ein Umschalten kann immer dann erfolgen, wenn die Speicherkapazität des jeweiligen Pufferspeichers 24 eines Bordnetzzweiges 14, 15 der aktuell von der Spannungsquelle 12 entkoppelt ist, erschöpft ist. Es kann eine Mindestumschaltzeit oder Mindestzeitdauer 33 vorgesehen sein. Die Mindestzeitdauer 33 kann in einem Bereich von 0,1 Sekunden bis 2 Sekunden liegen. Hierdurch können Ladezyklen und Entladezyklen der Pufferspeicher 24 in vorhersehbarer Weise ablaufen oder eingestellt werden. Indem die Pufferspeicher 24 jeweils zumindest eine Batterie umfassen, können auch Lastspitzen ausgeglichen werden.

Bei der Bordnetzvorrichtung 11 ist physikalisch sichergestellt, dass beide Klemmen 25 sicher versorgt werden. Die Anforderungen an die Umschaltvorrichtung 16 sind dabei lediglich auf ein Nicht-Schalten im Fehlerfall (In-Ordnung-Kriterium 31 verletzt) zu richten, was die Erfüllung eines ASIL technisch einfacher macht. Solange kein elektrischer Fehler in einem übrigen Verbraucher 23 vorliegt und auch die Spannungsquelle 12 funktionstüchtig ist, kann somit auch bei einem Fehler in einem der Bordnetzzweige 14, 15 das Kraftfahrzeug 10 weitergefahren werden. Wenn ein elektrischer Fehler in einem der übrigen Verbraucher oder in einem übrigen Verbraucher 23 vorliegt, muss lediglich abgewartet werden, bis das Sicherungselement 19 auslöst und damit den weiteren Bordnetzzweig 17 von der Spannungsquelle 12 trennt oder elektrisch entkoppelt. Die Bordnetzvorrichtung 11 ist dann wieder sicher. Auch die Pufferspeicher 24 müssen bei dieser beschriebenen redundanten Auslegung mit zwei Bordnetzzweigen 14, 15 nur geringeren ASIL-Anforderungen genügen.

Insgesamt zeigt das Beispiel, wie durch die Erfindung ein 12-Volt-Energienetz für Autonome-Fahrfunktionen abgesichert werden kann.

### Bezugszeichenliste

- 10: Kraftfahrzeug
- 11: Bordnetzvorrichtung
- 12: Spannungsquelle
- 13: Bezugspotential
- 14: Erster Bordnetzzweig
- 15: Zweiter Bordnetzzweig
- 16: Umschaltvorrichtung
- 17: Weiterer Bordnetzzweig
- 18: Anschlusseinrichtung
- 19: Sicherungselement
- 20: Verbindungsstelle
- 21: Elektrischer Verbraucher
- 22: Elektrischer Verbraucher
- 23: Elektrischer Verbraucher
- 24: Elektrischer Pufferspeicher
- 25: Klemme
- 26: Schaltelement
- 27: Steuereinrichtung
- 28: Schaltzustand
- 29: Schaltzustand
- 30: Prüfeinrichtung
- 31: In-Ordnung-Kriterium
- 32: Notlaufsignal
- 33: Mindestzeitdauer
- U: Bordnetzspannung

## Patentansprüche

1. Elektrische Bordnetzvorrichtung (11) zum Versorgen von zumindest zwei elektrischen Verbrauchern (21, 22) mit einer Bordnetzspannung (U) in einem Kraftfahrzeug (10), wobei die Bordnetzvorrichtung (11)
- eine Anschlusseinrichtung (18) zum Empfangen der Bordnetzspannung (U) aus einer Spannungsquelle (12) und
- einen ersten Bordnetzzweig (14), an dem einer oder einige der Verbraucher (21) angeschlossen sind, zum Weiterleiten der Bordnetzspannung (U) an jeden angeschlossenen Verbraucher (21) aufweist,
wobei ein zweiter Bordnetzzweig (15), an den jeder übrige der Verbraucher (22) angeschlossen ist, zum Weiterleiten der Bordnetzspannung (U) an jeden angeschlossenen übrigen Verbraucher (22) bereitgestellt ist und
die Anschlusseinrichtung (18) über zumindest ein Schaltelement (26) einer Umschaltvorrichtung (16) sowohl mit dem ersten Bordnetzzweig (14) als auch mit dem zweiten Bordnetzzweig (15) verbunden ist und
eine Steuereinrichtung (27) der Umschaltvorrichtung (16) dazu eingerichtet ist, die Anschlusseinrichtung (18) abwechselnd mit dem ersten Bordnetzzweig (14) und dem zweiten Bordnetzzweig (15) durch Umschalten des zumindest einen Schaltelements (26) elektrisch zu koppeln,
**dadurch gekennzeichnet, dass**
während einer der Bordnetzzweige (14, 15) mit der Anschlusseinrichtung (18) elektrisch gekoppelt ist, der jeweils andere Bordnetzzweig (15, 14) von der Anschlusseinrichtung (18) elektrisch entkoppelt ist und die Bordnetzspannung (U) aus der Spannungsquelle (12) also zu jedem Zeitpunkt nur in einen der beiden Bordnetzzweige (14, 15) weitergeleitet wird und die beiden Bordnetzzweige (14, 15) zu keinem Zeitpunkt elektrisch miteinander gekoppelt sind,
wobei an jedem Bordnetzzweig (14, 15) ein jeweiliger elektrischer Pufferspeicher (24) angeschlossen ist, welcher für jeden jeweils angeschlossenen Verbraucher (21, 22) elektrische Energie bereitstellt, während das zumindest eine Schaltelement (26) die Anschlusseinrichtung (18) mit dem jeweils anderen Bordnetzzweig (14, 15) verbindet, und durch den jeweiligen Pufferspeicher (24) in jedem Bordnetzzweig (14, 15) jeder an dem jeweiligen Bordnetzzweig (14, 15) angeschlossene elektrische Verbraucher (21, 22) durchgehend mit elektrischer Energie versorgt ist und
der jeweilige Pufferspeicher jedes Mal dann nachlädt, wenn das zumindest eine Schaltelement (26) auf den jeweiligen Bordnetzzweig (14, 15) umgeschaltet ist.

2. Bordnetzvorrichtung (11) nach Anspruch 1, wobei die Umschaltvorrichtung (16) eine Prüfeinrichtung (30) umfasst, die dazu eingerichtet ist, während das zumindest eine Schaltelement (26) die Anschlusseinrichtung (18) mit einem der Bordnetzzweige (14) verbindet, in dem anderen Bordnetzzweig (15) ein vorbestimmtes In-Ordnung-Kriterium (31) zu prüfen, wobei das In-Ordnung-Kriterium diejenigen elektrischen Bedingungen beschreibt, die anzeigen, dass der Bordnetzzweig kurzschlussfrei oder fehlerfrei ist, und die Steuereinrichtung (27) dazu eingerichtet ist, das zumindest eine Schaltelement (26) auf den anderen Bordnetzzweig (15) nur in dem Fall umzuschalten, dass die Prüfeinrichtung (30) signalisiert, dass das In-Ordnung-Kriterium (31) in dem anderen Bordnetzzweig (15) erfüllt ist.

3. Bordnetzvorrichtung (11) nach Anspruch 2, wobei für den Fall, dass die Prüfeinrichtung (30) signalisiert, dass das In-Ordnung-Kriterium (31) in einem der Bordnetzzweige (14, 15) verletzt ist, während das zumindest eine Schaltelement (26) auf diesen Bordnetzzweig (14, 15) geschaltet ist, die Steuereinrichtung (27) dazu eingerichtet ist, das zumindest eine Schaltelement auf den anderen Bordnetzzweig (14, 15) umzuschalten.

4. Bordnetzvorrichtung (11) nach einem der Ansprüche 2 oder 3, wobei das In-Ordnung-Kriterium (30) umfasst, dass in dem jeweiligen Bordnetzzweig (14, 15)
- eine Stromstärke kleiner als ein vorbestimmter Höchstwert ist und/oder durchgehend seit dem letzten Umschalten des zumindest einen Schaltelements (26) gewesen ist und/oder
- eine Zweigspannung größer als ein vorbestimmter Mindestwert ist und/oder durchgehend seit dem letzten Umschalten des zumindest einen Schaltelements (26) gewesen ist und/oder
- jeder angeschlossene Verbraucher (21, 22) einen fehlerfreien Betriebszustand signalisiert.

5. Bordnetzvorrichtung (11) nach einem der Ansprüche 2 oder 3, wobei die Steuereinrichtung (27) dazu eingerichtet ist, im Falle, dass das In-Ordnung-Kriterium (30) verletzt ist, ein Notlaufsignal (32) zu erzeugen.

6. Bordnetzvorrichtung (11) nach einem der vorhergehenden Ansprüche, wobei die Steuereinrichtung (27) dazu eingerichtet ist, das zumindest eine Schaltelement (26) umzuschalten, falls eine Restmenge an Energie in dem Pufferspeicher (24) desjenigen Bordnetzzweigs (14, 15), zu welchem hin umgeschaltet werden soll, kleiner als eine vorbestimmte Mindestmenge ist, und/oder wobei das Umschalten mindestens mit einer vorbestimmten Umschaltrate erfolgt.

7. Bordnetzvorrichtung (11) nach einem der vorhergehenden Ansprüche, wobei ein zusätzlicher Bordnetzzweig (17) über ein Sicherungselement (19) mit einer Verbindungsstelle (20), die zwischen der Anschlusseinrichtung (18) und der Umschaltvorrichtung (16) angeordnet ist, elektrisch verbunden ist und das Sicherungselement (19) dazu eingerichtet ist, die elektrische Verbindung des zusätzlichen Bordnetzzweigs (7) zur Verbindungsstelle (20) zu unterbrechen, falls ein in den zusätzlichen Bordnetzzweig (17) fließender elektrischer Strom größer als eine Auslöseschwelle ist.

8. Bordnetzvorrichtung (11) nach einem der vorhergehenden Ansprüche, wobei Steuereinrichtung (27) dazu eingerichtet ist, nach dem Umschalten des zumindest einen Schaltelements (26) dessen neuen Schaltzustand für eine vorbestimmte Mindestzeitdauer (33) zu halten.

9. Bordnetzvorrichtung (11) nach einem der vorhergehenden Ansprüche, wobei ein an den ersten Bordnetzzweig (14) angeschlossener Verbraucher (21) eine erste Teilsteuerung einer Fahrzeugfunktion und ein an den zweiten Bordnetzzweig (15) angeschlossener übriger Verbraucher (22) eine zweite Teilsteuerung derselben Fahrzeugfunktion ist.

10. Bordnetzvorrichtung (11) nach einem der vorhergehenden Ansprüche, wobei die Spannungsquelle (12) durch einen Generator und/oder durch eine über einen Gleichspannungswandler angeschlossene weitere Bordnetzvorrichtung (11) bereitgestellt ist.

11. Kraftfahrzeug (10), **dadurch gekennzeichnet, dass** das Kraftfahrzeug (10) eine Bordnetzvorrichtung (11) nach einem der vorhergehenden Ansprüche aufweist.

12. Verfahren zum Betreiben einer Bordnetzvorrichtung (11) nach einem der Ansprüche 1 bis 10, wobei eine Anschlusseinrichtung (18) der Bordnetzvorrichtung (11) eine Bordnetzspannung (U) aus einer Spannungsquelle (12) empfängt und an einen ersten Bordnetzzweig (14) ein oder einige Verbraucher (21) von zumindest zwei Verbrauchern (21, 22) angeschlossen sind,
wobei an einen zweiten Bordnetzzweig (15) jeder übrige der Verbraucher (22) angeschlossen ist und die Anschlusseinrichtung (18) über zumindest ein Schaltelement (26) einer Umschaltvorrichtung (16) sowohl mit dem ersten Bordnetzzweig (14) als auch mit dem zweiten Bordnetzzweig (15) verbunden ist und eine Steuereinrichtung (27) der Umschaltvorrichtung (16) die Anschlusseinrichtung (18) abwechselnd mit dem ersten Bordnetzzweig (14) und dem zweiten Bordnetzzweig (15) durch Umschalten des zumindest einen Schaltelements (26) elektrisch koppelt und somit die Bordnetzspannung (U) abwechselnd an jeden angeschlossenen Verbraucher (21) des ersten Bordnetzzweigs (14) und an jeden angeschlossenen Verbraucher (22) des zweiten Bordnetzzweigs (15) weitergeleitet wird,
**dadurch gekennzeichnet, dass**
während einer der Bordnetzzweige (14, 15) mit der Anschlusseinrichtung (18) elektrisch gekoppelt ist, der jeweils andere Bordnetzzweig (15, 14) von der Anschlusseinrichtung (18) elektrisch entkoppelt ist und die Bordnetzspannung (U) aus der Spannungsquelle (12) also zu jedem Zeitpunkt nur in einen der beiden Bordnetzzweige (14, 15) weitergeleitet wird und die beiden Bordnetzzweige (14, 15) zu keinem Zeitpunkt elektrisch miteinander gekoppelt sind,
wobei an jedem Bordnetzzweig (14, 15) ein jeweiliger elektrischer Pufferspeicher (24) angeschlossen ist, welcher für jeden jeweils angeschlossenen Verbraucher (21, 22) elektrische Energie bereitstellt, während das zumindest eine Schaltelement (26) die Anschlusseinrichtung (18) mit dem jeweils anderen Bordnetzzweig (14, 15) verbindet, und durch den jeweiligen Pufferspeicher (24) in jedem Bordnetzzweig (14, 15) jeder an dem jeweiligen Bordnetzzweig (14, 15) angeschlossene elektrische Verbraucher (21, 22) durchgehend mit elektrischer Energie versorgt wird und
der jeweilige Pufferspeicher jedes Mal dann nachgeladen wird, wenn das zumindest eine Schaltelement (26) auf den jeweiligen Bordnetzzweig (14, 15) umgeschaltet ist.

## Claims

1. Electrical on-board network apparatus (11) for supplying at least two electrical loads (21, 22) with an on-board network voltage (U) in a motor vehicle (10), the on-board network apparatus (11) having
- a connection device (18) for receiving the on-board network voltage (U) from a voltage source (12) and
- a first on-board network branch (14), to which one or some of the loads (21) are connected, for transmitting the on-board network voltage (U) to each connected load (21),
a second on-board network branch (15) to which each remaining load (22) is connected being provided for transmitting the on-board network voltage (U) to each connected remaining load (22), and
the connection device (18) being connected both to the first on-board network branch (14) and to the second on-board network branch (15) via at least one switching element (26) of a switch-over apparatus (16), and
a control device (27) of the switch-over apparatus (16) being configured to electrically couple the connection device (18) alternately to the first on-board network branch (14) and to the second on-board network branch (15) by switching the at least one switching element (26) over,
**characterized in that**
while one of the on-board network branches (14, 15) is electrically coupled to the connection device (18), the other on-board network branch (15, 14) is electrically decoupled from the connection device (18), and the on-board network voltage (U) from the voltage source (12) is therefore transmitted to only one of the two on-board network branches (14, 15) at any point in time, and the two on-board network branches (14, 15) are not electrically coupled to one another at any time,
a relevant electrical buffer memory (24) being connected to each on-board network branch (14, 15), which memory provides electrical energy for each connected load (21, 22), while the at least one switching element (26) connects the connection device (18) to the other on-board network branch (14, 15), and, by means of the relevant buffer memory (24) in each on-board network branch (14, 15), each electrical load (21, 22) connected to the relevant on-board network branch (14, 15) being supplied continuously with electrical energy, and
the relevant buffer memory then reloading each time the at least one switching element (26) is switched over to the relevant on-board network branch (14, 15).

2. On-board network apparatus (11) according to claim 1, wherein the switch-over apparatus (16) comprises a test device (30) which is configured to check, while the at least one switching element (26) connects the connection device (18) to one of the on-board network branches (14), a predetermined OK criterion (31) in the other on-board network branch (15), wherein the OK criterion describes those electrical conditions which indicate that the on-board network branch is short-circuit-free or fault-free, and the control device (27) is configured to switch the at least one switching element (26) over to the other on-board network branch (15) only in the event that the test device (30) signals that the OK criterion (31) has been met in the other on-board network branch (15).

3. On-board network apparatus (11) according to claim 2, wherein, in the event that the test device (30) signals that the OK criterion (31) is violated in one of the on-board network branches (14, 15), while the at least one switching element (26) is switched to this on-board network branch (14, 15), the control device (27) is configured to switch the at least one switching element over to the other on-board network branch (14, 15).

4. On-board network apparatus (11) according to either claim 2 or claim 3, wherein the OK criterion (30) comprises that, in the relevant on-board network branch (14, 15),
- a current intensity is less than a predetermined maximum value and/or has been continuous since the last switch-over of the at least one switching element (26), and/or
- a branch voltage is greater than a predetermined minimum value and/or has been continuous since the last switch over of the at least one switching element (26), and/or
- each connected load (21, 22) signals a fault-free operating state.

5. On-board network apparatus (11) according to either claim 2 or claim 3, wherein the control device (27) is configured to generate an emergency operation signal (32) in the event that the OK criterion (30) is violated.

6. On-board network apparatus (11) according to any of the preceding claims, wherein the control device (27) is configured to switch the at least one switching element (26) over in the event that a residual amount of energy in the buffer memory (24) of the on-board network branch (14, 15) to which switch over is to take place is less than a predetermined minimum amount, and/or wherein the switch over takes place at least at a predetermined switch-over rate.

7. On-board network apparatus (11) according to any of the preceding claims, wherein an additional on-board network branch (17) is electrically connected via a fuse element (19) to a connection point (20) which is arranged between the connection device (18) and the switch-over apparatus (16), and the fuse element (19) is configured to interrupt the electrical connection of the additional on-board network branch (7) to the connection point (20) in the event that an electrical current flowing into the additional on-board network branch (17) is greater than a trigger threshold.

8. On-board network apparatus (11) according to any of the preceding claims, wherein the control device (27) is configured to maintain, after the switch over of the at least one switching element (26), the new switching state of said element for a predetermined minimum duration (33).

9. On-board network apparatus (11) according to any of the preceding claims, wherein a load (21) connected to the first on-board network branch (14) is a first sub-controller of a vehicle function and a remaining load (22) connected to the second on-board network branch (15) is a second sub-controller of the same vehicle function.

10. On-board network apparatus (11) according to any of the preceding claims, wherein the voltage source (12) is provided by a generator and/or by a further on-board network apparatus (11) connected via a DC voltage converter.

11. Motor vehicle (10), **characterized in that** the motor vehicle (10) comprises an on-board network apparatus (11) according to any of the preceding claims.

12. Method for operating an on-board network apparatus (11) according to any of claims 1 to 10, a connection device (18) of the on-board network apparatus (11) receiving an on-board network voltage (U) from a voltage source (12) and one or some loads (21) of at least two loads (21, 22) being connected to a first on-board network branch (14),
each remaining load (22) being connected to a second on-board network branch (15), and the connection device (18) being connected both to the first on-board network branch (14) and to the second on-board network branch (15) via at least one switching element (26) of a switch-over apparatus (16), and a control device (27) of the switch-over apparatus (16) electrically coupling the connection device (18) alternately to the first on-board network branch (14) and to the second on-board network branch (15) by switching the at least one switching element (26) over, and thus the on-board network voltage (U) being transmitted alternately to each connected load (21) of the first on-board network branch (14) and to each connected load (22) of the second on-board network branch (15),
**characterized in that**
while one of the on-board network branches (14, 15) is electrically coupled to the connection device (18), the other on-board network branch (15, 14) is electrically decoupled from the connection device (18), and the on-board network voltage (U) from the voltage source (12) is therefore transmitted to only one of the two on-board network branches (14, 15) at any point in time, and the two on-board network branches (14, 15) are not electrically coupled to one another at any time,
a relevant electrical buffer memory (24) being connected to each on-board network branch (14, 15), which buffer memory provides electrical energy for each connected load (21, 22), while the at least one switching element (26) connects the connection device (18) to the other on-board network branch (14, 15), and, by means of the relevant buffer memory (24) in each on-board network branch (14, 15), each electrical load (21, 22) connected to the relevant on-board network branch (14, 15) being supplied continuously with electrical energy, and the relevant buffer memory being subsequently reloaded when the at least one switching element (26) is switched over to the relevant on-board network branch (14, 15).

## Revendications

1. Dispositif de réseau de bord électrique (11) pour alimenter au moins deux consommateurs électriques (21, 22) en une tension de réseau de bord (U) dans un véhicule automobile (10), le dispositif de réseau de bord (11)
- présentant un moyen de raccordement (18) destiné à recevoir la tension de réseau de bord (U) provenant d'une source de tension (12) et
- une première branche de réseau de bord (14), à laquelle un ou plusieurs des consommateurs (21) sont raccordés, destinée à transmettre la tension de réseau de bord (U) à chaque consommateur (21) raccordé,
dans lequel une seconde branche de réseau de bord (15) est prévue, à laquelle chaque consommateur restant des consommateurs (22) est raccordé, destinée à transmettre la tension de réseau de bord (U) à chaque consommateur (22) restant et
le moyen de raccordement (18) est relié par le biais d'au moins un élément de commutation (26) d'un dispositif de commutation (16) à la fois à la première branche de réseau de bord (14) et à la seconde branche de réseau de bord (15) et
un moyen de commande (27) du dispositif de commutation (16) est conçu pour coupler électriquement le moyen de raccordement (18) alternativement à la première branche de réseau de bord (14) et à la seconde branche de réseau de bord (15) par commutation de l'au moins un élément de commutation (26),
**caractérisé en ce que**
tandis qu'une des branches de réseau de bord (14, 15) est électriquement couplée au moyen de raccordement (18), l'autre branche de réseau de bord (15, 14) respective est électriquement découplée du moyen de raccordement (18) et la tension de réseau de bord (U) provenant de la source de tension (12) est transmise à tout moment seulement dans l'une des deux branches de réseau de bord (14, 15) et les deux branches de réseau de bord (14, 15) ne sont à aucun moment couplées électriquement l'une à l'autre,
dans lequel, à chaque branche de réseau de bord (14, 15), un réservoir d'accumulation électrique (24) respectif est raccordé, qui fournit de l'énergie électrique pour chaque consommateur (21, 22) raccordé respectif, tandis que l'au moins un élément de commutation (26) relie le moyen de raccordement (18) à l'autre branche de réseau de bord (14, 15) respective et chaque consommateur électrique (21, 22) raccordé à la branche de réseau de bord (14, 15) respective est alimenté en continu en énergie électrique par le réservoir d'accumulation (24) respectif dans chaque branche de réseau de bord (14, 15) et
le réservoir d'accumulation respectif se recharge à chaque fois que l'au moins un élément de commutation (26) est commuté sur la branche de réseau de bord (14, 15) respective.

2. Dispositif de réseau de bord (11) selon la revendication 1, dans lequel le dispositif de commutation (16) comprend un moyen de contrôle (30), qui est conçu pour, tandis que l'au moins un élément de commutation (26) relie le moyen de raccordement (18) à une des branches de réseau de bord (14), dans l'autre branche de réseau de bord (15), contrôler un critère de fonctionnement correct (31) prédéterminé, dans lequel le critère de fonctionnement correct décrit les conditions électriques qui indiquent que la branche de réseau de bord est exempte de courtcircuit ou de défaillance et le moyen de commande (27) est conçu pour commuter l'au moins un élément de commutation (26) vers l'autre branche de réseau de bord (15) uniquement dans le cas où le moyen de contrôle (30) signale, que le critère de fonctionnement correct (31) est satisfait dans l'autre branche de réseau de bord (15).

3. Dispositif de réseau de bord (11) selon la revendication 2, dans lequel dans le cas où le moyen de contrôle (30) signale que le critère de fonctionnement correct (31) n'est pas respecté dans l'une des branches de réseau de bord (14, 15), tandis que l'au moins un élément de commutation (26) est commuté sur cette branche de réseau de bord (14, 15), le moyen de commande (27) est conçu pour commuter l'au moins un élément de commutation sur l'autre branche de réseau de bord (14, 15).

4. Dispositif de réseau de bord (11) selon l'une quelconque des revendications 2 ou 3, dans lequel le critère de fonctionnement correct (30) comprend que dans la branche de réseau de bord (14, 15) respective
- une intensité du courant est inférieure à une valeur maximale prédéterminée et/ou a été continue depuis la dernière commutation de l'au moins un élément de commutation (26) et/ou
- une tension de branche est supérieure à une valeur minimale prédéterminée et/ou a été continue depuis la dernière commutation de l'au moins un élément de commutation (26) et/ou
- chaque consommateur (21, 22) raccordé signale un état de fonctionnement sans défaillance.

5. Dispositif de réseau de bord (11) selon l'une quelconque des revendications 2 ou 3, dans lequel le moyen de commande (27) est conçu pour produire un signal d'urgence (32) dans le cas où le critère de fonctionnement correct (30) n'est pas respecté.

6. Dispositif de réseau de bord (11) selon l'une quelconque des revendications précédentes, dans lequel le moyen de commande (27) est conçu pour commuter l'au moins un élément de commutation (26) si une quantité résiduelle d'une dans un réservoir d'accumulation (24) de la branche de réseau de bord (14, 15), vers laquelle la commutation doit être effectuée, est inférieure à une quantité minimale prédéterminée et/ou dans lequel la commutation est effectuée au moins avec une fréquence de commutation prédéterminée.

7. Dispositif de réseau de bord (11) selon l'une quelconque des revendications précédentes, dans lequel une branche de réseau de bord (17) supplémentaire est électriquement reliée par le biais d'un élément de sécurité (19) à un point de raccordement (20), qui est agencé entre le moyen de raccordement (18) et le dispositif de commutation (16) et l'élément de sécurité (19) est conçu pour interrompre la liaison électrique de la branche de réseau de bord (7) supplémentaire au point de raccordement (20) lorsqu'un courant électrique circulant dans la branche de réseau de bord (17) supplémentaire est supérieur à un seuil de déclenchement.

8. Dispositif de réseau de bord (11) selon l'une quelconque des revendications précédentes, dans lequel le moyen de commande (27) est conçu pour, après la commutation de l'au moins un élément de commutation (26), maintenir son nouvel état de commutation pendant une durée minimale (33) prédéterminée.

9. Dispositif de réseau de bord (11) selon l'une quelconque des revendications précédentes, dans lequel un consommateur (21) raccordé à la première branche de réseau de bord (14) est une première commande partielle d'une fonction de véhicule et un consommateur (22) restant raccordé à la seconde branche de réseau de bord (15) est une seconde commande partielle de la même fonction de véhicule.

10. Dispositif de réseau de bord (11) selon l'une quelconque des revendications précédentes, dans lequel la source de tension (12) est fournie par un générateur et/ou par un autre dispositif de réseau de bord (11) raccordé par le biais d'un convertisseur de courant continu.

11. Véhicule automobile (10), **caractérisé en ce que** le véhicule automobile (10) présente un dispositif de réseau de bord (11) selon l'une quelconque des revendications précédentes.

12. Procédé pour faire fonctionner un dispositif de réseau de bord (11) selon l'une quelconque des revendications 1 à 10, dans lequel un moyen de raccordement (18) du réseau de bord (11) reçoit une tension de réseau de bord (U) provenant d'une source de tension (12) et un ou plusieurs consommateurs (21) parmi au moins deux consommateurs (21, 22) sont raccordés à une première branche de réseau de bord (14),
dans lequel chaque consommateur restant des consommateurs (22) est raccordé à une seconde branche de réseau de bord (15) et le moyen de raccordement (18) est relié par le biais d'au moins un élément de commutation (26) d'un dispositif de commutation (16) à la fois à la première branche de réseau de bord (14) et à la seconde branche de réseau de bord (15) et un moyen de commande (27) du dispositif de commutation (16) couple électriquement le moyen de raccordement (18) alternativement à la première branche de réseau de bord (14) et à la seconde branche de réseau de bord (15) par commutation de l'au moins un élément de commutation (26) et ainsi la tension de réseau de bord (U) est transmise alternativement à chaque consommateur (21) raccordé de la première branche de réseau de bord (14) et à chaque consommateur (22) raccordé de la seconde branche de réseau de bord (15),
**caractérisé en ce que**
tandis qu'une des branches de réseau de bord (14, 15) est électriquement couplée au moyen de raccordement (18), l'autre branche de réseau de bord (15, 14) respective est électriquement découplée du moyen de raccordement (18) et la tension de réseau de bord (U) provenant de la source de tension (12) est transmise à tout moment seulement dans l'une des deux branches de réseau de bord (14, 15) et les deux branches de réseau de bord (14, 15) ne sont à aucun moment couplées électriquement l'une à l'autre,
dans lequel, à chaque branche de réseau de bord (14, 15), un réservoir d'accumulation électrique (24) respectif est raccordé, qui fournit de l'énergie électrique pour chaque consommateur (21, 22) raccordé respectif, tandis que l'au moins un élément de commutation (26) relie le moyen de raccordement (18) à l'autre branche de réseau de bord (14, 15) respective et chaque consommateur électrique (21, 22) raccordé à la branche de réseau de bord (14, 15) respective est alimenté en continu en énergie électrique par le réservoir d'accumulation (24) respectif dans chaque branche de réseau de bord (14, 15) et le réservoir d'accumulation respectif se recharge à chaque fois que l'au moins un élément de commutation (26) est commuté sur la branche de réseau de bord (14, 15) respective.
